# EUROPEAN PATENT SPECIFICATION

(11) **EP 2 708 981 B1**
(45) Date of publication and mention of the grant of the patent: **10.10.2018**
(21) Application number: 13181890.8
(22) Date of filing: 27.08.2013
(51) Int. Cl.: G06F 3/01

(54) **Gesture recognition apparatus, control method thereof, display instrument, and computer readable medium**
Gestenerkennungsvorrichtung, Steuerverfahren dafür, Anzeigeinstrument und computerlesbares Medium
Appareil de reconnaissance de geste, son procédé de commande, instrument d'affichage et support lisible par ordinateur

(30) Priority: 31.08.2012 JP 2012192038
(43) Date of publication of application: 19.03.2014
(73) Proprietor: OMRON CORPORATION, Kyoto-shi, Kyoto 600-8530 (JP)
(72) Inventor: Yamashita, Takayoshi, Kyoto, 600-8530 (JP)
(74) Representative: Isarpatent

(56) References cited:
- EP-A2- 2 306 272
- US-A1- 2012 051 651
- FLAVIA SPARACINO: "Natural interaction in intelligent spaces: Designing for architecture and entertainment", MULTIMEDIA TOOLS AND APPLICATIONS, KLUWER ACADEMIC PUBLISHERS, BO, vol. 38, no. 3, 17 April 2008 (2008-04-17) , pages 307-335, XP019612006, ISSN: 1573-7721
- KEMMOTSU K ET AL: "Recognizing human behaviors with vision sensors in a network robot system", 2006 IEEE INTERNATIONAL CONFERENCE ON ROBOTICS AND AUTOMATION (ICRA) : ORLANDO, FLORIDA, 15 - 19 MAY 2006, IEEE OPERATIONS CENTER, PISCATAWAY, NJ, 15 May 2006 (2006-05-15), pages 1274-1279, XP010921446, DOI: 10.1109/ROBOT.2006.1641884 ISBN: 978-0-7803-9505-3
- HARIS BALTZAKIS ET AL: "Visual tracking of hands, faces and facial features of multiple persons", MACHINE VISION AND APPLICATIONS, SPRINGER, BERLIN, DE, vol. 23, no. 6, 4 February 2012 (2012-02-04), pages 1141-1157, XP035124883, ISSN: 1432-1769, DOI: 10.1007/S00138-012-0409-5

## Description

### TECHNICAL FIELD

The present invention relates to a gesture recognition apparatus that recognizes a gesture from action of a recognition-target object, a control method thereof, a display instrument, and a computer readable medium.

### BACKGROUND ART

Recently, a display instrument, in which a display device such as a television receiver, a personal computer, and a tablet terminal is combined with a gesture recognition apparatus that recognizes a gesture of a recognition-target object operated by an operator, appears on the scene. In the display instrument, there is a demand for the gesture recognition apparatus, which recognizes the gesture made using an operator's hand or finger such that necessity for the operator to wear a special accessory such as a data glove is eliminated and such that the operator naturally and smoothly performs an operation to the display instrument.

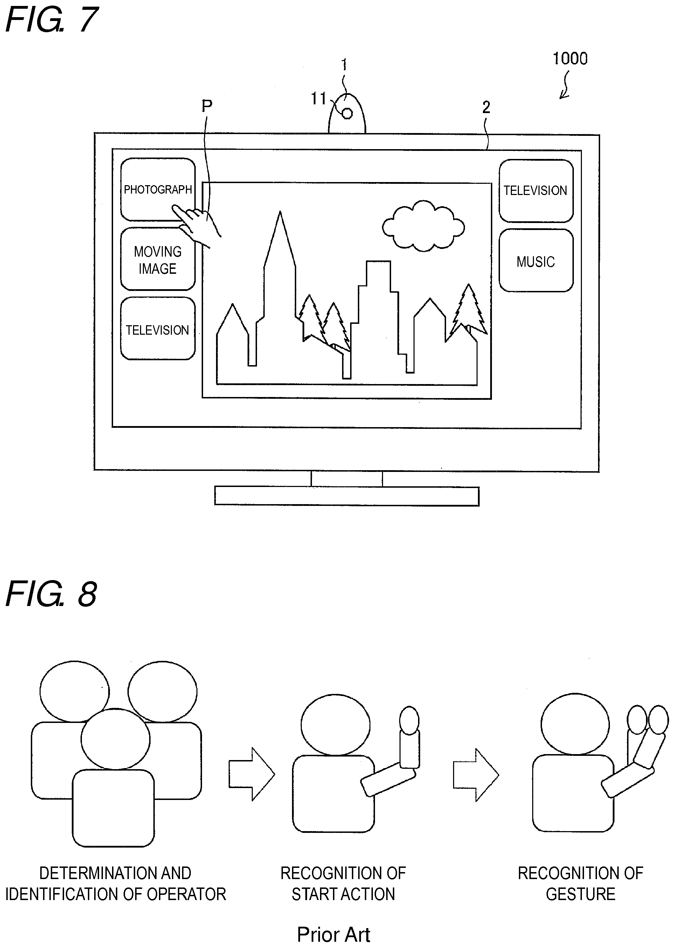

A flow of the gesture recognition in the conventional gesture recognition apparatus will be described with reference to Fig. 8. As illustrated in Fig. 8, in the conventional gesture recognition, at first the operator is identified or determined. That is, the gesture recognition apparatus determines which one of a plurality of recognized persons is set to the operator, or determines whether the recognized person is included in a previously-registered operator list. Then the operator transmits a start of the gesture to the gesture recognition apparatus. Specifically, for example, when the operator performs a start action such that the operator raises the operator's hand, the gesture recognition apparatus recognizes the start action to be ready to perform the gesture recognition of a recognition-target object (for example, the operator's hand and a pointer). Then the gesture recognition apparatus recognizes the gesture that is made by the operator using the recognition-target object after the start action.

In operator specification and determination methods in the conventional gesture recognition apparatus, data about a feature of a face of the operator is previously registered in the gesture recognition apparatus, and the person in which the data is registered is determined to be the operator by performing face authentication to the person photographed in the image. However, in the operator specification and determination methods, it is necessary to previously register the person as the operator in the gesture recognition apparatus in order to operate the gesture recognition apparatus. Therefore, it is inconvenient for a user. There is a demand for a method for certifying the person other than the previously-registered person as the operator.

For example, in a method for controlling instruments such as a television set, Japanese Unexamined Patent Publication No. 2004-303251 (published on October 28, 2004) discloses a control method, in which attributes of a plurality of persons are monitored and the operator of the instrument is selected based on the monitored attributes of the persons. Examples of the attributes of the persons include a position of the person, an expression of the person, and an accessory of the person. In the control method disclosed in Japanese Unexamined Patent Publication No. 2004-303251, the person who is located closest to a predetermined position or the person who performs a predetermined posture or action (for example, raising the hand) is selected as the operator in the monitored persons.

Japanese Unexamined Patent Publication No. 11-327753 (published on November 30, 1999) also discloses the control method for selecting the operator of the instruments such as the television set based on the attribute of the monitored predetermined person.

However, as disclosed in Japanese Unexamined Patent Publication Nos. 2004-303251 and 11-327753, in the case that the person who performs predetermined start action is determined to be the operator, it is difficult to specify the person who performs the predetermined start action, namely, the performer. Particularly, Japanese Unexamined Patent Publication Nos. 2004-303251 and 11-327753 describe that the person who raises the hand is selected as the operator, but do not disclose the method for specifying the person who raises the hand. Accordingly, for example, in the case that the persons exist on the right and left of the raised hand, it is not possible to identify which one of the persons is the performer who raises the hand. Therefore, in the control methods disclosed in Japanese Unexamined Patent Publication Nos. 2004-303251 and 11-327753, unfortunately the performer cannot correctly be identified.

In view of the problems described above, it is desired to provide a gesture recognition apparatus that can correctly specify the performer who performs the predetermined action.

EP 2 306 272 has been identified as the closest prior art and discloses a gesture recognition method that uses the position of the hand with respect to the face to determine whether it is the left or right hand and to link a specific hand to a face.
Also relevant are:
FLAVIA SPARACINO: "Natural interaction in intelligent spaces: Designing for architecture and entertainment", MULTIMEDIA TOOLS AND APPLICATIONS, KLUWER ACADEMIC PUBLISHERS, BO, vol. 38, no. 3, 17 April 2008 (2008-04-17), pages 307-335, XP019612006, ISSN: 1573-7721 and
HARIS BALTZAKIS ET AL: "Visual tracking of hands, faces and facial features of multiple persons",MACHINE VISION AND APPLICATIONS, SPRINGER, BERLIN, DE, vol. 23, no. 6, 4 February 2012 (2012-02-04), pages 1141-1157, XP035124883,ISSN: 1432-1769, DOI: 10.1007/S00138-012-0409-5.

### SUMMARY

In accordance with one aspect of the present invention, a gesture recognition apparatus for recognizing a gesture of a hand of a user from a moving image in which action of the hand of the user is photographed, comprises: the features of claim 1.

In accordance with another aspect of the present invention, a method for controlling a gesture recognition apparatus that recognizes a gesture of a hand of a user from a moving image in which action of the hand of the user is photographed, the method comprises: the features of claim 13.

### BRIEF DESCRIPTION OF THE DRAWINGS

Fig. 1 is a block diagram illustrating a configuration of a gesture recognition apparatus according to a first embodiment of the present invention;
Fig. 2A is a schematic diagram illustrating an operator who performs start action that the operator waves an operator's hand, and Fig. 2B illustrates an accumulated value in which a difference between moving images, in each of which action to wave an operator's hand is photographed, is accumulated in an area Z in Fig. 2A;
Fig. 3 is an explanatory view illustrating a positional relationship between a face position and a thumb of a performer who performs action to raise the operator's hand in a recognition area;
Fig. 4 is a flowchart illustrating the action of the gesture recognition apparatus in Fig. 1;
Fig. 5 is a block diagram illustrating a configuration of a gesture recognition apparatus according to a second embodiment of the present invention;
Fig. 6 is a flowchart illustrating action of the gesture recognition apparatus in Fig. 5;
Fig. 7 is an external view illustrating a display instrument to which the gesture recognition apparatus in Fig. 1 is applied; and
Fig. 8 is an explanatory view illustrating a general flow of gesture recognition.

### DETAILED DESCRIPTION

Hereinafter, embodiments of the present invention will be described in detail. Hereinafter, the "right" and the "left" express a direction viewed from a person who visually recognizes a moving image.

### [First embodiment]

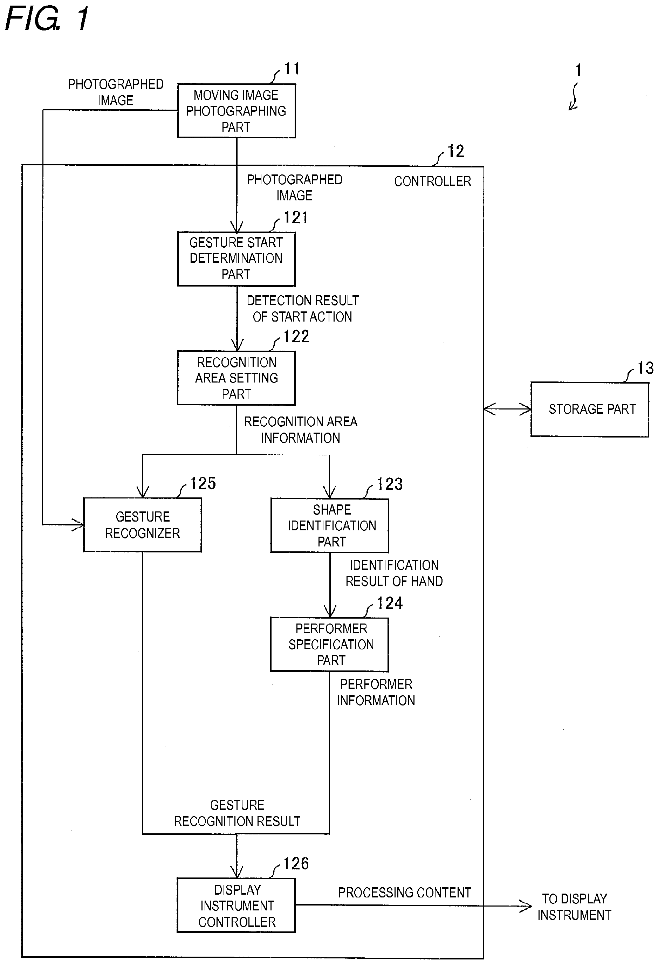

A gesture recognition apparatus 1 according to a first embodiment of the present invention will be described below with reference to Figs. 1 to 4.

### (Configuration of gesture recognition apparatus 1)

A configuration of the gesture recognition apparatus 1 will be described with reference to Fig. 1. Fig. 1 is a block diagram illustrating the configuration of the gesture recognition apparatus 1.

As illustrated in Fig. 1, the gesture recognition apparatus 1 includes a moving image photographing part 11, a controller 12, and a storage part 13. Details of each member will be described below.

### (1. Moving image photographing part 11)

The moving image photographing part 11 photographs a spatial image including an operator. More particularly, the moving image photographing part 11 photographs the operator who is a main body performing a gesture and a recognition-target object (a user's hand) that becomes a target of gesture recognition, and generates moving image data. The moving image photographing part 11 transmits a photographed frame image to the controller 12 at regular intervals of a predetermined time (for example, 1/15 second).

### (2. Controller 12)

The controller 12 wholly controls each part included in the gesture recognition apparatus 1, and the controller 12 includes a gesture start determination part 121, a recognition area setting part 122, a shape identification part 123, a performer specification part 124, a gesture recognizer 125, and a display instrument controller (processing performing part) 126. The details of each part included in the controller 12are described later.

### (3. Storage part 13)

Various pieces of data handled by the gesture recognition apparatus 1 are stored in the storage part 13, and the storage part 13 includes a temporary storage part in which the data is temporarily stored and a storage device in which the data is stored in a nonvolatile manner. The temporary storage part is what is called a working memory in which the data used in calculation and a calculation result are temporarily stored in a process of various pieces of processing performed by the gesture recognition apparatus 1. For example, the temporary storage part includes a RAM. A control program and an OS program, which are executed by the controller 12, and various pieces of data to be read in performing various functions included in the gesture recognition apparatus 1 are stored in the storage device. For example, the storage device includes a ROM.

### (Detailed configuration of controller 12)

The detailed configuration of the controller 12 will be described with reference to Figs. 1 to 3. In the following description, a "performer" means a person who performs start action or action to raise the hand, and an "operator" means a person to whom reception of the gesture recognition is certified by the gesture recognition apparatus 1.

### (1. Gesture start determination part 121)

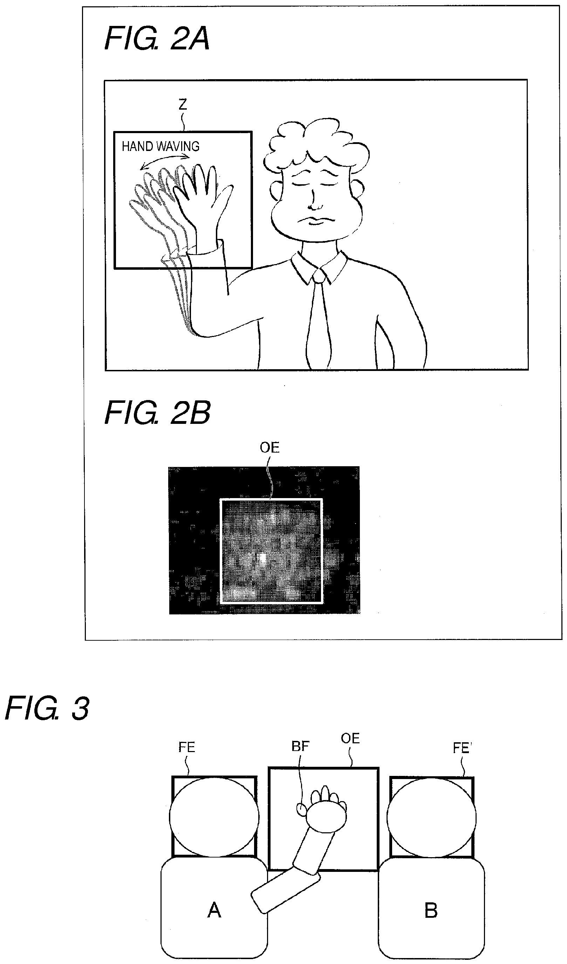

When determining the start action, the gesture start determination part 121 determines that the performer who performs the start action intends to start the gesture. As used herein, the start action means action in which the performer raises the user's hand up to a side of a face and waves the hand at that position as illustrated in Fig. 2A. Particularly, when the operator performs the start action to horizontally wave the hand while orienting a palm, in which all fingers are stretched, toward the gesture recognition apparatus 1 (the moving image photographing part 11), the gesture start determination part 121 determines that the performer intends to start the gesture. However, in the present invention, the start action is not limited to the above start action. For example, based on a shape, a displacement, and a speed, the gesture start determination part 121 can detect such start action that a predetermined shape is formed by the hand while distinguishing the start action from other action.

In detecting the start action in which the performer waves the hand, the gesture start determination part 121 extracts a difference between the images in each of which the start action is photographed. For example, the processing of extracting the difference between the images is performed to 30 frame images, and the extracted differences are accumulated. Therefore, the difference between the positions of the hand of the performer who performs the start action is accumulated. Fig. 2B illustrates an example, in which the start action to wave the hand is photographed and the difference between the images in which the start action is photographed is accumulated. In Fig. 2B, the accumulated value of the difference increases with increasing white intensity. Fig. 2B is an enlarged view of the area Z in Fig. 2A. The gesture start determination part 121 sets an area where, the accumulated value of the difference between the images is greater than a predetermined value, as an action area, and the gesture start determination part 121 determines that the start action to wave the hand is detected when the gesture start determination part 121 is able to detect the action area.

### (2. Recognition area setting part 122)

The recognition area setting part 122 sets recognition area OE where the gesture recognizer 125 recognizes the gesture in the whole area of the moving image after the gesture start determination part 121 detects the start action.

In setting the recognition area OE, for example, the recognition area setting part 122 extracts an area having a predetermined shape and color from the moving image, and sets the recognition area OE to a position having a predetermined positional relationship with respect to the extracted area. For example, the recognition area setting part 122 extracts the face position of the performer by extracting an area having the shape of the face and the skin color, and sets the recognition area OE to the side of the face position. A shape and a size of the recognition area OE may be a square that becomes 1.5 times the face position area extracted by the recognition area setting part 122.

In the present invention, it is not always necessary to set the recognition area OE. The gesture recognizer 125 may be configured to perform the gesture recognition in the whole moving image without setting the recognition area OE. In this case, necessity of the recognition area setting part 122 is eliminated.

### (3. Shape identification part 123)

While the performer performs the start action, the shape identification part 123 detects the hand existing in the recognition area OE, and identifies whether the hand is the right hand or the left hand. Alternatively, using display or sound, the shape identification part 123 may issue an instruction to the performer, who ends the start action to wave the hand, to move the unclenched hand into the recognition area OE. In this case, for example, the shape identification part 123 issues the instruction to the performer to move the hand to the side of the face as illustrated in Fig. 2A.

A background difference between the successive frame images is performed in the recognition area OE to extract the area that constitutes a foreground of the image, thereby performing the processing of detecting the hand in the recognition area OE. When the performer makes the gesture, it is considered that another body does not exist between the performer and the gesture recognition apparatus 1 (the moving image photographing part 11). Accordingly, the performer's hand is detected by extracting the foreground of the image in the recognition area OE.

### (Identification of hand)

The processing of identifying whether the hand detected in the recognition area OE is the right hand or the left hand is performed as follows.

The shape identification part 123 extracts a leading end portion (more correctly, an upper end portion) in the detected hand. At this point, because the start action is the action to wave the hand as described above, the detected hand is unclenched into the shape in which all the fingers are stretched, and the palm is oriented toward the gesture recognition apparatus 1 (the moving image photographing part 11). Accordingly, the leading end of each finger is extracted by extracting the leading end portion of the detected hand. Then the leading end portion located at the lowest level is selected from the extracted leading end portions (that is, the front ends of the fingers) with respect to a y-coordinate, namely, a vertical direction. The thumb is generally selected. Then the shape identification part 123 determines whether the selected leading end portion (the thumb) is located in a right end portion or a left end portion in the hand area. Alternatively, the shape identification part 123 may simply determine whether the selected leading end portion is closer to the right end portion or the left end portion of the hand. Therefore, the determination that the detected hand is the right hand or the left hand can be made. Specifically, the shape identification part 123 determines that the detected hand is the right hand in the case that the thumb is located in the right end portion of the hand, and the shape identification part 123 determines that the detected hand is the left hand in the case that the thumb is located in the left end portion of the hand. Fig. 3 illustrates an example of the positional relationship between the hand position and the performer. In Fig. 3, a person A and the hand raised by the person A are oriented upward, namely, toward the gesture recognition apparatus 1 (the moving image photographing part 11) like the person in Fig. 2A. The person A raises the left hand in which the fingers are stretched while the palm is oriented toward the front. At this point, as can be seen from Fig. 3, the left hand of the person A is located on the right side (in the recognition area OE) of the face position FE of the person A. In other words, the face position FE of the person A is located on the left side of the left hand of the person A. A thumb BF of the left hand raised by the person A is located closest to the face of the person A namely, the left end portion of the left hand relative to other fingers. In Fig. 3, a person B exists on the right side of the person A with respect to the left hand of the person A, and the left hand of the person A is located on the left side of a face position FE' of the person B. Although not illustrated, in the case that the person A raises the right hand, it is understood that the face position FE of the person A is located on the right side of the right hand of the person A. Thus, which one of the right and left side the performer is located on can be understood based on whether the hand raised by the performer is the right hand or the left hand.

The shape identification part 123 can identify whether not only the unclenched hand in which all the fingers are stretched but also the hand in which only the index finger is stretched is the right hand or the left hand. The identification method is as follows. The shape identification part 123 extracts the leading end portion (more correctly, the upper end portion) of the hand. In the case that the hand in which only the index finger is stretched, is detected, only the leading end of the index finger is extracted as the leading end portion. Then the determination whether the extracted leading end portion is closer to the right end portion or the left end portion of the hand is made. The extracted leading end portion (that is, the index finger) is closer to the left end portion of the hand when the detected hand is the left hand, and the extracted leading end portion is closer to the right end portion of the hand when the detected hand is the right hand. Accordingly, the shape identification part 123 determines that the detected hand is the right hand when the extracted leading end portion (the index finger) is located closer to the right of the hand, and the shape identification part 123 determines that the detected hand is the left hand when the index finger is located closer to the left of the hand.

For the hand having the shape in which only the index finger and a middle finger are stretched, the hand can similarly be identified when one of the two leading end portions (that is, the index finger), which is lower than the other leading end portion, is selected from the image.

### (4. Performer specification part 124)

The performer specification part 124 specifies the performer by specifying the position of the performer based on whether the hand detected by the shape identification part 123 is the right hand or the left hand.

Particularly, the performer specification part 124 detects the face of the person, who exists at a position closest to the hand in the right (the left) area of the hand, as the face of the performer when the hand detected by the shape identification part 123 is the right hand (the left hand). The performer specification part 124 stores the face position FE indicating the position of the face detected in each frame image in the storage part 13.

In order to detect the face of the human from the image, the skin color area may be extracted from the image, or the skin color area may be extracted from the image in conjunction with well-known face detection technologies such as the template matching. In the first embodiment, the performer specification part 124 extracts the skin color area in conjunction with the template matching, estimates the positions of the eyebrow and the mouth based on a color change in the skin color area, and sets the minimum square area having sides parallel to the horizontal direction and vertical directions of the image, which includes the estimated eyebrow and mouth, as the face position FE.

### (Template matching)

The template matching means a method for calculating a degree of coincidence (matching) between a sample such as the input image and a previously-prepared model.

A flow of template matching processing will briefly be described below. For the purpose of the template matching, a template of a face shape is previously stored in the storage part 13.

A portion of the skin color area which exists closest to the hand detected by the shape identification part 123 is compared to the template of the face shape prepared in the storage part 13. It is determined that the skin color area does not correspond to the face of the human in the case that a degree of similarity between the skin color area and the template is less than a predetermined value. Then the degree of similarity to the template is calculated with respect to the position second closest to the thumb. The calculation of the degree of similarity is repeated, and the determination that the skin color area is the face of the human is made when the skin color area having the degree of similarity with respect to the template greater than or equal to the predetermined value is discovered, and the processing is ended. Desirably, a plurality of templates different from each other exists as the templates used to perform the template matching processing. In this case, in the template matching processing, the matching between each template and the sample is calculated, and the sample is determined to be comparable to the human face when the template having the degree of similarity with respect to the sample is equal to or greater than the predetermined value exists.

Thus, the face can correctly be detected in conjunction with the template matching compared with the simple determination that the skin color area is the face.

### (5. Gesture recognizer 125)

The gesture recognizer 125 performs the gesture recognition by recognizing the position, the shape, and the displacement of the hand or the recognition-target object other than the hand in the recognition area OE. For example, an HMM (Hidden Markov Model) or continuous DP (Dynamic Programming) can be used as a gesture recognition method.

### (Gesture recognition)

The method in which the HMM is used can be adopted in order to perform the gesture recognition. In the method in which the HMM is used, a model in each type of the gesture recognized by the gesture recognition apparatus 1 is previously stored in the storage part 13 in the form of a database. Then the gesture recognizer 125 calculates a likelihood of each model included in the database with respect to the image input to the gesture recognition apparatus 1. In the case that one or a plurality of models in which the likelihood to the input image is greater than or equal to a predetermined value is discovered, the gesture recognizer 125 sets the gesture corresponding to the model having the highest likelihood to the gesture recognized from the input image.

The gesture recognizer 125 measures a displacement of an index finger leading end F in addition to the gesture recognition in which the HMM is used. Therefore, as described later, a pointer P (see Fig. 7) displayed in a display instrument 1000 can work with the action of the index finger leading end F.

### (6. Display instrument controller 126)

The display instrument controller 126 performs processing corresponding to the gesture recognition result of the gesture recognizer 125 in the display instrument external to the gesture recognition apparatus 1. Particularly, the display instrument controller 126 refers to a gesture-processing table indicating a processing content corresponding to each type of the gesture. The gesture-processing table is stored in the storage part 13. In the display instrument, the display instrument controller 126 performs the processing corresponding to the gesture recognition result performed by the gesture recognizer 125.

A display instrument 1000 controlled by the display instrument controller 126 will be described with reference to Fig. 7. The display instrument controller 126 transmits a control signal indicating an instruction to perform the processing content determined based on the gesture recognition result to a control functional part (not illustrated) included in the display instrument 1000. The control functional part receives the control signal transmitted from the display instrument controller 126, and performs the processing content. For example, the processing content is processing of moving the pointer P displayed on a display device 2 based on the recognition result of the displacement of the recognition-target object. Alternatively, the processing content may be processing of selecting an icon, which is displayed while overlapping with the pointer P, in the case that the gesture in which the operator makes a predetermined shape by the operator's hand is recognized. By the simple operation in which the recognition-target object is used, the operator can operate the display instrument 1000 without touching the screen of the display device 2.

### (Flow of gesture recognition processing X)

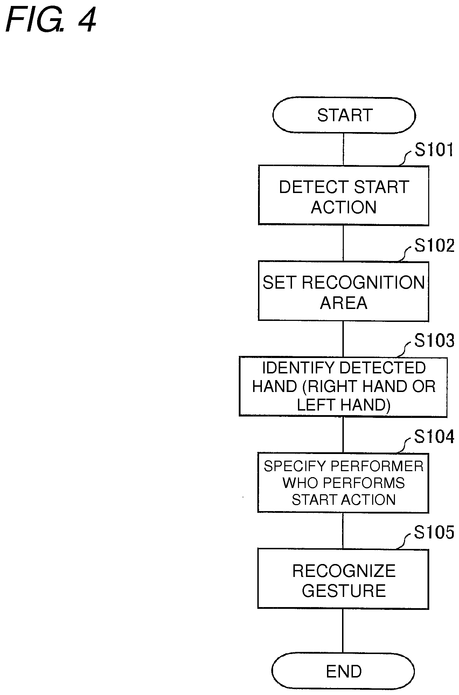

A flow of the gesture recognition processing X performed by the controller 12 will be described with reference to Fig. 4. In the gesture recognition processing X, whether the performer intends to start the gesture is determined based on the start action. Whether the hand detected in the recognition area OE is the right hand or the left hand is identified, and the performer, namely, the owner of the detected hand is specified based on the identification result. The gesture recognition of the recognition-target object is started in the case that the performer is recognized as the operator. The gesture recognition processing X will be described below in detail. In the following description, it is assumed that the recognition-target object is the hand, but the present invention is not limited to this. Alternatively, the recognition-target object may be a pointer or a remote controller.

The gesture start determination part 121 detects the start action of the performer (S101). The gesture start determination part 121 sets the action area based on the detected start action.

The recognition area setting part 122 sets the recognition area based on the action area (S102).

The shape identification part 123 detects the hand in the recognition area OE, and identifies whether the detected hand is the right hand or the left hand (S103).

When the detected hand is the right hand (or the left hand) after the shape identification part 123 identifies the hand, the performer specification part 124 specifies the person closest to the hand as the performer in the right (or the left) area (S104).

The gesture recognizer 125 performs the gesture recognition in the recognition area OE (S105).

After the gesture recognizer 125 performs the gesture recognition, the display instrument controller 126 performs the processing corresponding to the gesture recognition result in the display instrument in conjunction with the control functional part included in the display instrument. At this point, as described later, the display instrument controller 126 may change the display instrument controlling method based on a feature of the performer.

The gesture recognition processing X is ended.

### [Example to change display instrument controlling method]

The following three examples are cited as an example in which the display instrument controller 126 changes the display instrument controlling method based on the feature of the performer.

In a first example, the gesture-processing table indicating a correspondence between certain gesture and the processing corresponding to the gesture is stored in the storage part 13 with respect to each operator. In the gesture recognition processing Y of the first example, a face authentication part included in the controller 12 performs the face authentication of the performer. Then the display instrument controller 126 determines the operator that corresponds to the performer from a face authentication result of the face authentication part. Based on the gesture-processing table applied to the operator, the display instrument controller 126 controls the display instrument by a processing content corresponding to the gesture recognized by the gesture recognizer 125. At this point, because the gesture-processing table is set for each operator, the processing content may be varied for each operator in the case that certain gesture is performed. Accordingly, by setting the desirable gesture-processing table, the operator operates the display instrument with the gesture as if the operator operates a remote controller customized for the operator.

### (Face authentication)

The face authentication part performs the face authentication as below. The face authentication part extracts the face detected by the performer specification part 124, namely, a feature quantity indicating the feature of the face of the performer, and the degree of similarity indicating a degree of coincidence with the feature quantity of the face of the operator included in an operator list stored in the storage part 13 is calculated. The feature quantities of the faces of the persons who are accepted as the operators are listed on the operator list. The feature quantity of the face means information in which the positional relationship of each component (such as the eye, the nose, and the mouth) of the face, the color of the face, and the shape of the face are digitized. After the face authentication part calculates the degree of similarity between the performer and each operator, the display instrument controller 126 determines whether the degree of similarity between the performer and one of the operators included in the operator list having the highest degree of similarity with the performer (the highest degree of similarity) is greater than or equal to a predetermined value. The determination that the performer and the most similar operator are the identical person is made when the degree of similarity is greater than or equal to the predetermined value, and the determination that the performer and the most similar operator are not the identical person when the degree of similarity is less than the predetermined value.

The operator may be determined based on the feature quantity indicating the feature of the hand instead of determining the operator based on the face authentication, in other words, the feature quantity of the face. In this case, the controller 12 further includes a hand authentication part that authenticates the performer's hand. In the configuration, an operator list α in which the feature quantities of the hand are listed for each operator is stored in the storage part 13. In the gesture recognition processing Y, the hand authentication part refers to the operator list α to authenticate the hand of the performer. The display instrument controller 126 determines the operator based on a hand authentication result of the hand authentication part.

In a second example, the display instrument controller 126 changes the gesture-processing table and the display device display method and/or the display instrument operation method according to gender and an age of the performer or a combination thereof, which is estimated based on the feature of the performer, particularly, the feature quantity of the face of the performer. At this point, the feature quantity of the face of the performer means information in which, for example, a size of the face, a size of the eye, and a ratio of a length and a width of the face are digitized. In the second example, the gesture-processing table is not set based on each operator, but is set based on the gender and the age of the operator or the combination thereof. For example, when determining that the performer is woman and/or an aged person, the display instrument controller 126 provides a UI that displays an icon on the display device in order to launch an Internet browser or a television screen. Therefore, the operator can operate the display instrument by the simple operation to displace the recognition-target object to the position of the icon. On the other hand, when determining that the performer is man and/or a younger person, the display instrument controller 126 provides the gesture-processing table in which a shortcut operation or other operations are correlated with various shapes and action of the hand. In this case, the operator can perform various operations only by the shape and action of the hand. In the second example, the gesture-processing table and the display device display method and/or the display instrument operation method are changed according to the gender and/or the age of the performer. Therefore, the plurality of operators having different genders and/or ages can operate the display instrument at levels appropriate to the operator.

In a third example, in the case that the degree of similarity between the performer and the operator included in the operator list is less than the predetermined value, the display instrument controller 126 may be configured to add the performer to the operator list. According to the configuration, the person who is newly registered as the operator can perform the registration of the operator by the simple action to raise the hand.

In still another example, the operation performed by the person other than the performer may not be accepted only for a given time after the start action. Therefore, even if a plurality of persons exist in front of the moving image photographing part 11, the gesture recognition apparatus 1 does not accept the gesture performed by the person other than the performer who performs the start action for the given time after the start action. Therefore, the performer can perform the operation without the interruption of the gestures of other persons. Advantageously, the action that is not the gesture performed by the person other than the performer is not falsely recognized.

### [Second embodiment]

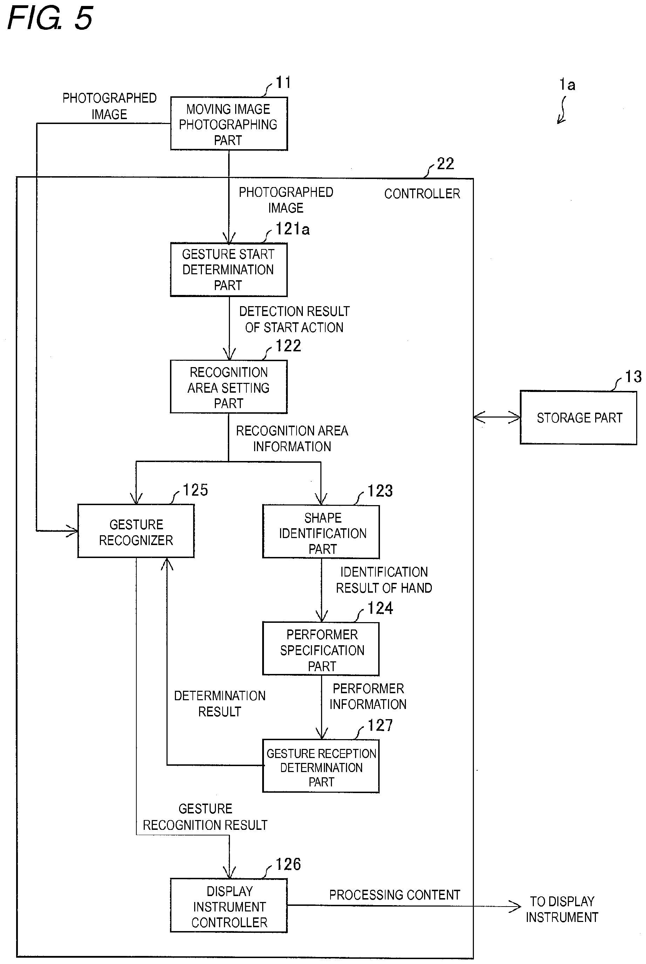

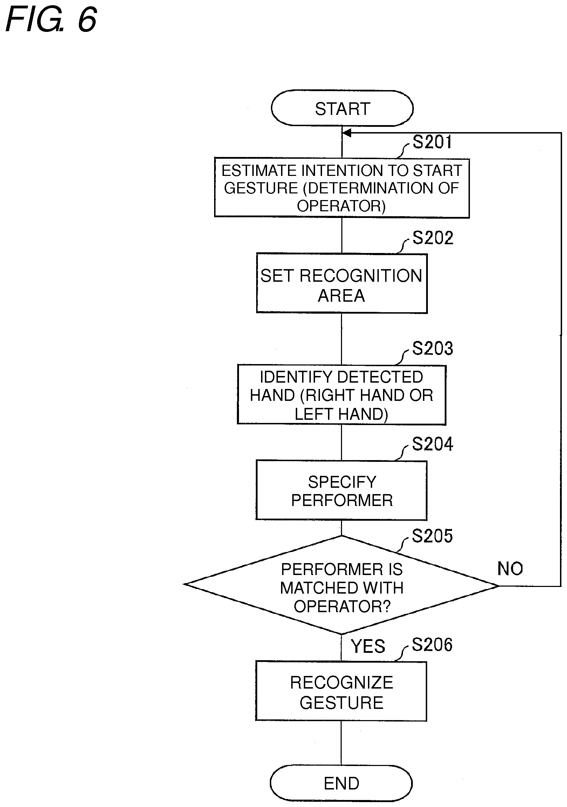

A gesture recognition apparatus 1a according to a second embodiment of the present invention will be described below with reference to Figs. 5 and 6. For the sake of convenience, the member identical to that in the drawing of the first embodiment is designated by the identical numeral, and the description is omitted.

In the first embodiment, the start action of the performer is detected, and the person who performs the start action is determined to be the performer. On the other hand, in the second embodiment, a sight line direction is estimated, and the person in which the sight line direction remains still is accepted as the operator.

In the second embodiment, in the following gesture recognition processing Z, processing performed by each part included in the controller 22, particularly processing performed by a gesture start determination part 121a differs from the processing performed by the gesture start determination part 121. Specifically, in the first embodiment, the gesture start determination part 121 determines the performer by detecting the start action. On the other hand, in the second embodiment, the gesture start determination part 121a estimates the operator having the intention to start the gesture based on the stillness of sight line direction and the stillness of the face position or the stillness of the face direction. In the second embodiment, the controller 22 further includes a gesture reception determination part 127 that determination that the gesture of the performer is not accepted in the case that the operator determined by the gesture start determination part 121a differs from the performer specified by the performer specification part 124.

The gesture start determination part 121a and the gesture reception determination part 127 will be described below in detail.

### (1. Gesture start determination part 121a)

The gesture start determination part 121a includes a sight line direction estimation part and a face detector. Each part included in the gesture start determination part 121a will be described below in detail.

### (A. Face detector)

The face detector acquires the image photographed by the moving image photographing part 11, and detects a human face and a face position FE (that is, an area occupied by the face in the image; see Fig. 3) from the image. The face detector stores the face position FE estimated in each frame image in the storage part 13. The human face can be extracted from the image by a well-known face detection technology. For example, a skin color area is extracted in conjunction with template matching, the positions of an eyebrow and a mouth are estimated based on a color change in the skin color area, and a minimum square area having sides parallel to horizontal and vertical directions, which includes the estimated eyebrow and mouth, may be set as the face position FE.

### (Template matching)

The template matching means a method for calculating a degree of coincidence (matching) between a sample such as the input image and a previously-prepared model.

A flow of template matching processing will briefly be described below. For the purpose of the template matching, the template of the face shape is previously stored in the storage part 13.

A portion of the skin color area extracted from the image is compared to the template of the face shape prepared in the storage part 13. In the skin color area, a portion in which a degree of similarity with the template is less than a predetermined value is determined not to be comparable to the human face, and excluded. Then the gesture recognition processing is performed to the remaining skin color area, namely, the area where the degree of similarity with the template is equal to or greater than the predetermined value. Desirably, a plurality of templates different from each other may be used. In this case, in the template matching processing, the matching between each template and the sample is calculated, and the sample is determined to be comparable to the human face when the template having the degree of similarity with respect to the sample is equal to or greater than the predetermined value exists.

### (B. Sight line direction estimation part)

The sight line direction estimation part estimates a sight line direction LV of the operator. The sight line direction estimation part stores the estimated sight line direction in the storage part 13 for each of all the frame images photographed by the moving image photographing part 11 or for each of a predetermined number of frame images photographed by the moving image photographing part 11.

### (Sight line direction estimation)

The estimation of the sight line direction may be implemented as follows.

The sight line direction estimation part extracts an eye position in the image area corresponding to the face position FE. In order to extract the eye from the face position FE, the area having the highest luminance may be extracted from the face position FE. Therefore, generally the area of a white of eye is extracted. The area surrounded by a contour of the extracted white of eye constitutes the area of the eye. Then the sight line direction estimation part extracts an iris. The iris can be discovered by extracting a low-luminance area where the white of eye that is of the high-luminance area is the surrounding area. After extracting the eye and the iris, the sight line direction estimation part estimates the sight line direction from a deviation of the iris in a horizontal direction in the area of the eye.

### (Detail of gesture start determination)

A detail of the gesture start determination performed by the gesture start determination part 121a will be described below.

The gesture start determination part 121a acquires the face position FE and the sight line direction LV from the storage part 13. Particularly, the gesture start determination part 121a acquires the face position FE and the sight line direction LV in a plurality of the successive frame images (for example, 30 frame images). The gesture start determination part 121a determines whether the face position of the operator remains still based on a displacement of the face position FE among the acquired frame images, and the gesture start determination part 121a determines whether the sight line direction of the operator remains still based on a displacement of the sight line direction LV among the frame images. At this point, when causing the gesture recognition apparatus 1 to recognize the gesture, the operator gazes at the moving image photographing part 11, namely, a camera. Therefore, when the operator intends to start the gesture, the face position of the operator remains still, and the sight line direction of the operator stands still while being oriented toward the moving image photographing part 11. In a predetermined period, the gesture start determination part 121a determines that the operator intends to start the gesture, when an angle formed by a predetermined direction and the sight line direction LV is less than a predetermined value (a condition A), and when the displacement of the face position FE is less than a predetermined value (a condition B).

Particularly, the gesture start determination part 121a determines that the operator intends to start the gesture when the following two intention determination conditions are both satisfied.

Condition A: The sight line direction exists within an angle range of 10° with respect to the direction directly confronting the moving image photographing part 11 in the successive 30 frame images. That is, in the successive 30 frame images, the sight line direction is included in a cone, which spreads at an angle of 10° around a reference straight line connecting a center of the iris and the moving image photographing part 11 with the center of the iris as a vertex.

Condition B: In the successive 30 frame images, the center (or a predetermined point such as a gravity center) of the face position FE is included in one circle having a diameter of 10% of a width (a horizontal length) of the face position FE.

However, the conditions that are used by the gesture start determination part 121a in order to determine the operator's intention to start the gesture are not limited to the conditions A and B. For example, in the condition A, whether the sight line of the operator remains still in one of another predetermined direction and a plurality of predetermined directions instead of the moving image photographing part 11 may be used as the condition of the gesture start determination. In the conditions A and B, the angle of the cone and the diameter of the circle may be changed within a range where the sight line direction and the face position of the operator are considered to remain still. The sight line direction and the face position of the operator move largely with increasing angle of the cone and diameter of the circle, and the gesture recognition apparatus 1 starts the gesture recognition even if the operator hardly intends to start the gesture. On the other hand, with decreasing angle of the cone and diameter of the circle, the gesture recognition apparatus 1 starts the gesture recognition processing only when the sight line direction or the face position of the operator hardly moves.

### (Detail of another gesture start determination)

A modification of the gesture start determination will be described.

In the modification, the gesture start determination part 121a further includes a face direction estimation part that estimates a face direction of the operator in addition to the sight line direction estimation part and the face detector. The face direction estimation part estimates the face direction of the operator in the face position FE acquired from the face detector. A face direction estimation method is as follows. In the modification, whether the face direction of the operator remains still is determined instead of determining whether the face position of the operator remains still.

The modification is based on the following discussion. When the operator gazes at the moving image photographing part 11 in order to cause the gesture recognition apparatus 1a to recognize the gesture, the sight line direction of the operator stands still while being oriented toward the moving image photographing part 11, and the operator's face stands still while directly confronting the moving image photographing part 11. Therefore, it is considered that the operator intends to start the gesture, in the case that the displacement of the face position FE detected by the face detector is less than a predetermined value, and in the case that the angle formed by the face direction estimated by the face direction estimation part and a predetermined direction is less than a predetermined value.

In the modification, instead of the intention determination condition that the face position FE remains still like the first embodiment, the condition that the face direction remains still in the predetermined direction is used as one of the intention determination conditions. At this point, specifically the predetermined direction of the face direction may be a direction directly confronting the moving image photographing part 11.

In the first embodiment, possibly the determination that the operator intends to start the gesture is made even if the face position remains still while the operator's face is not oriented toward the predetermined direction, for example, the direction of the moving image photographing part 11. On the other hand, in the modification, the determination that the operator intends to start the gesture is made based on the fact that the face direction remains still in the predetermined direction, so that the user's intention to start the gesture may be determined more correctly.

### (Face direction estimation)

The estimation of the sight line direction can be applied in order to estimate the face direction of the person (in other words, a head orientation). Particularly, the determination that the face direction directly confronts the gesture recognition apparatus 1 (correctly, the moving image photographing part 11) is made in the case that the eyes extracted from the moving image are symmetrically located with respect to a horizontal center line of the face position FE. On the other hand, determination that the face direction does not directly confront the gesture recognition apparatus 1, namely, that the operator looks aside is made in the case that the position of the extracted eyes are asymmetrically located with respect to the center line.

### (2. Gesture reception determination part 127)

The gesture reception determination part 127 determines whether the gesture of the performer is accepted based on the positional relationship between the operator determined by the gesture start determination part 121a and the performer detected by the shape identification part 123. Particularly, in the case that the performer's hand is the right hand (the left hand), the gesture reception determination part 127 determines that the operator is matched with the performer when the operator is located on the right side (the left side) and closest to the thumb of the hand, and the gesture reception determination part 127 determines that the gesture by the hand of the performer is accepted.

On the other hand, when the performer's hand is located in other positions, the gesture reception determination part 127 determines that the operator differs from the performer, and determines that the gesture by the hand of the performer is not accepted. Therefore, in the case that the shape identification part 123 detects the hand of the person (the performer) who is not the operator, the gesture of the person is not falsely recognized.

### (Flow of gesture recognition processing Z)

A flow of the gesture recognition processing Z performed by the controller 22 will be described with reference to Fig. 6. In the gesture recognition processing Z, based on the fact that the sight line direction remains still, the intention to start the gesture is determined, and the person who intends to start the gesture is determined to be the operator. Whether the hand detected in the recognition area OE is the right hand or the left hand is identified, and the performer, namely, the owner of the detected hand is specified based on the identification result. The gesture recognition of the performer is accepted in the case that the performer and the operator are the identical person. The gesture recognition processing Z will be described below in detail with reference to a flowchart in Fig. 6.

Based on the fact that the sight line direction of the person whose face is detected, the sight line direction estimation part 128 estimates that the person intends to start the gesture (S201). Therefore, the person in which the sight line direction remains still is recognized as the operator.

The recognition area setting part 122 sets the recognition area OE based on the face position FE of the operator (S202). Specifically, the recognition area setting part 122 sets the square recognition area OE having the size 1.5 times the face position FE to right and left positions or one of the right and left positions of the face position FE.

The shape identification part 123 detects the hand in the recognition area OE, and identifies whether the detected hand is the right hand or the left hand (S203).

When the detected hand is the right hand (or the left hand) after the shape identification part 123 identifies the hand, the performer specification part 124 specifies the person closest to the hand as the person who performs the action, namely, the performer in the right (or the left) area (S204).

The display instrument controller 126 determines whether the operator determined by the sight line direction estimation part 128 is matched with the performer specified by the performer specification part 124 (S205).

When the operator is not matched with the performer (NO in S205), the flow returns to Step S201 in which the sight line direction estimation part 128 estimates the intention to start the gesture based on the sight line direction. On the other hand, when the operator is matched with the performer (YES in S205) the gesture recognizer 125 recognizes the gesture of the hand detected by the shape identification part 123 (S206), and ends the gesture recognition processing.

### [Third embodiment]

The display instrument 1000 according to a third embodiment of the present invention will be described below with reference to Fig. 7. For the sake of convenience, the member identical to that in the drawings of the first and second embodiments is designated by the identical numeral, and the description is omitted.

### (Configuration of display instrument 1000)

The display instrument 1000 having an exterior in Fig. 7 includes the gesture recognition apparatus 1 and the display device 2. In the display instrument 1000, the gesture recognition apparatus 1a of the modification may be used instead of the gesture recognition apparatus 1. Specifically, the display instrument 1000 is a personal computer. However, the present invention is not limited to this, and alternatively, the display instrument 1000 may be various display instruments, such as a television receiver, an internet television set, and a tablet terminal, which include a control function and a display function.

Although the gesture recognition apparatus 1 is placed above the display device 2 in Fig. 7, there is no particular limitation to the position where the gesture recognition apparatus 1 is placed. The gesture recognition apparatus 1 may be placed below the display device 2 or on the right or left side of the display device 2, or the gesture recognition apparatus 1 may be configured to be integral with the display device 2.

As to the configuration in which the gesture recognition apparatus 1 and the display device 2 are integrally provided, for example, the moving image photographing part 11 may be included in a frame surrounding the screen of the display device 2. In the case that the display device 2 includes a web camera, the web camera can be used instead of the moving image photographing part 11. In this case, the whole of the gesture recognition apparatus 1 is implemented in a software manner.

### (Display instrument controller 126)

In the third embodiment, the display instrument controller 126 controls the display of the display device 2 based on the gesture recognition result acquired from the gesture recognizer 125. For example, the display instrument controller 126 controls the pointer P displayed on the display device 2 in cooperation with the control functional part (not illustrated) included in the display instrument 1000. The pointer P performs the action corresponding to the gesture of the recognition-target object based on the result of the gesture recognition of the recognition-target object by the gesture recognition apparatus 1. When the operator performs the action of the recognition-target object in the recognition area OE, the pointer P works with the action of the recognition-target object in the screen of the display device 2. Therefore, the operator can operate the pointer P displayed on the screen without contacting the screen of the display device 2 or without use of a tool such as a remote controller.

A usage example of the display instrument 1000 will be described below. The operator makes the gesture in the recognition area OE using the recognition-target object (the hand). The gesture of the recognition-target object is photographed by the moving image photographing part 11, recognized by the gesture recognizer 125, and input to the display instrument controller 126. The display instrument controller 126 transmits a control content of the pointer P, which is determined based on the gesture recognition result, to the control functional part included in the display device 2. The control functional part controls the pointer P displayed on the display device 2 in cooperation with the display instrument controller 126. Alternatively, the display instrument controller 126 may be configured not only to control the displacement of the pointer P but also to cause the control functional part to perform the processing content corresponding to the shape of the recognition-target object. For example, in the case that the operator performs the action to clench fists, the display instrument controller 126 can perform the control such that the icon, which is displayed at the position overlapping with the pointer P, is selected.

According to the embodiments of the present invention, the face of the user is detected in the moving image, whether the hand performing the gesture is the right hand or the left hand is identified, and the performer is specified from the users based on the identification result. At this point, for example, the shape of the hand may be a shape in which all the fingers are stretched while a palm is oriented toward the predetermined direction, a shape in which an index finger and a middle finger are stretched, or a shape in which only the index finger is stretched. The performer does not perform the special action, but makes the simple shape by the hand, thereby specifying the face of the performer.

When the identified hand is the right hand (the left hand), the person who is closest to the hand while located on the right side (the left side) of the hand is specified as the performer.

As described above, in the case that the palm of the hand is oriented toward the moving image photographing part, the thumb is located in the right end portion (the left end portion) of the hand in the moving image in which all the fingers are stretched in the right hand (the left hand). The index finger is located on the right side (the left side) of the hand in the moving image in which the right hand (the left hand) performs finger pointing. Usually another person does not exist between the performer and the hand thereof when the performer raises the hand.

Accordingly, the performer that is the person who raises the hand identified by the shape identification part can be identified.

According to the embodiments of the present invention, the hand has a shape in which all fingers are stretched, and the shape identification part determines that the hand is the right hand when a thumb of the hand is located in a right end portion of the hand, and the shape identification part determines that the hand is the left hand when the thumb of the hand is located in a left end portion of the hand.

Accordingly, when the performer raises the hand in which all the fingers are stretched, the hand is identified based on whether the thumb of the hand is located in the right end portion or the left end portion of the hand. In the case that the palm of the hand is oriented toward the moving image photographing part, the thumb is located in the right end portion (the left end portion) of the hand in the moving image in which all the fingers are stretched in the right hand (the left hand), thereby identifying the hand. Accordingly, as described above, the hand of the performer is identified by performing not the special action but the simple action to raise the hand having the shape, so that the performer can naturally be specified.

According to the embodiments of the present invention, the shape identification part extracts leading end portions of the hand, and identifies the leading end portion, which has a lowest position in a vertical direction of the moving image among the extracted leading end portions, as the thumb.

Accordingly, in the case that performer raises the hand in which all the fingers are stretched, the five fingers are extracted by extracting the leading end portions. The leading end portion located in the lowest position is the thumb in the five fingers. Accordingly, the thumb is selected when the leading end portion having the lowest position in the vertical direction of the moving image is selected in the leading end portions. According to the configuration, because the thumb can be selected, the hand can be identified based on whether the thumb is located in the right or left end portion.

According to the embodiments of the present invention, the hand has the shape in which only an index finger is stretched, and the shape identification part determines that the hand is the right hand when the index finger of the hand is located on right side of the hand, and the shape identification part determines that the hand is the left hand when the index finger of the hand is located on the left side of the hand.

Accordingly, when the performer raises the hand in which the index finger is stretched, namely, the finger pointing is performed, the hand is identified based on whether the index finger of the hand is located on the right or the left of the hand. Accordingly, as described above, the hand of the performer is identified by performing not the special action but the simple action to raise the hand in which the finger pointing is performed, so that the performer can naturally be specified. The position on the right of the hand means a position included in the right area with respect to a horizontal center line of the hand, and the position on the left of the hand means a position included in the left area with respect to the center line.

According to the embodiments of the present invention, the gesture recognition apparatus may further comprise: a storage part configured to store an operator list and a gesture-processing table for each operator, feature quantities of the faces of the operators who are persons whose gestures are accepted being listed in the operator list, the gesture-processing table indicating a correspondence relationship between the gesture recognized for each operator and a performed processing content; a face authentication part configured to authenticate the face of the performer by determining a degree of similarity between a feature quantity of the face of the performer and a feature quantity of the operator list; and a processing performing part configured to specify the operator corresponding to the performer based on a result of the face authentication, and perform the processing corresponding to the gesture by referring to the gesture-processing table applied to the operator.

Accordingly, the face authentication is performed based on the feature quantity of the face of the performer, thereby specifying the operator corresponding to the performer. At this point, the operator corresponding to the performer means an operator who is determined to be the person identical to the performer by the operator determination part. Then the processing corresponding to the gesture is performed based on the gesture-processing table applied to the operator. At this point, the operator may set the gesture-processing table. Accordingly, the performer, namely, the operator can perform the comfortable operation by customizing the gesture-processing table applied to the operator in the desired manner.

According to the embodiments of the present invention, the processing performing part adds the feature quantity of the face of the performer to the operator list to authenticate the performer as the operator when the degree of similarity determined by the face authentication part is less than a predetermined value.

Accordingly, the performer specified by the performer specification part is added to the operator list, and certified as the operator. Therefore, for example, the person who is not registered as the operator yet can simply be registered as the operator by the simple action such that the person raises the hand in which all the fingers are stretched.

According to the embodiments of the present invention, the processing performing part does not accept the gesture other than the operator for a predetermined time after the operator is specified or certified.

Accordingly, the gesture of the person except the performer is not accepted for the predetermined time after the performer is specified. Even if the person except the performer exists around the performer, the gesture recognition apparatus accepts only the gesture of the performer. Therefore, the performer can perform the comfortable operation without interruption caused by the reception of the gesture of the person except the performer by the gesture recognition apparatus.

According to the embodiments of the present invention, the gesture recognition apparatus may further comprise a gesture start determination part configured to determine whether the gesture made by the hand is started based on a predetermined condition, wherein the shape identification part is configured to identify the hand when the gesture start determination part determines that the gesture made by the hand is started.

Accordingly, when the determination that the user intends to start the gesture is made, the pieces of processing from the identification of the hand are performed. Therefore, the user can transmit the intention to start the gesture to the gesture recognition apparatus by satisfying the predetermined condition. On the other hand, because the gesture recognition apparatus does not perform the pieces of processing from the identification of the hand unless the predetermined condition is satisfied, reduction of a processing load and therefore electric power saving can be achieved when the user does not make the gesture.

According to the embodiments of the present invention, the predetermined condition is action in which the user waves the hand.

Accordingly, when the user performs the start action to wave the hand, the gesture recognition apparatus determines that the user intends to start the gesture. Accordingly, the user can transmit the intention to start the gesture to the gesture recognition apparatus by performing the simple action to wave the hand.

According to the embodiments of the present invention, the predetermined condition is that an angle formed by a predetermined direction and a sight line direction of the user is less than a predetermined value for a given time.

Accordingly, the user orients the sight line toward the predetermined direction, for example, the direction of the moving image photographing part included in the gesture recognition apparatus for the given time, whereby the gesture recognition apparatus determines that the user intends to start the gesture. Accordingly, the user can transmit the intention to start the gesture to the gesture recognition apparatus by not performing special action but only orienting the sight line toward the predetermined direction.

According to the embodiments of the present invention, the gesture recognition apparatus may further comprise an instrument controller configured to issue an instruction to an external instrument to perform the processing corresponding to the gesture.

Accordingly, the processing corresponding to the gesture is performed by the external instrument. For example, the external instrument is a display instrument including a display device. Therefore, the user can make the gesture to operate the external instrument such as the display instrument.

According to the embodiments of the present invention, the gesture recognition apparatus may be achieved by a computer. In this case, a control program stored in a computer readable medium causes the computer to perform each piece of processing of the gesture recognition apparatus controlling method.

According to the embodiments of the present invention, a display instrument may include the gesture recognition apparatus and a display device for displaying each piece of information held by the gesture recognition apparatus to a user, in which action is controlled by the gesture recognition apparatus.

Therefore, advantageously the performer who performs the predetermined action can correctly be specified.

The present invention is not limited to the first to third embodiments, but various changes can be made without departing from the scope of the claims.

### [Construction example by software]

Each block of the gesture recognition apparatuses 1 and 1a, particularly each part included in the controllers 12 and 22 may be constructed by hardware using a logic circuit formed on an integrated circuit (an IC chip), or by software using a CPU (Central Processing Unit).

In the latter case, the gesture recognition apparatuses 1 and 1a include the CPU that executes a command of the program implementing each function, the ROM (Read Only Memory) in which the program is stored, the RAM (Random Access Memory) in which the program is expanded, and the storage device (the recording medium), such as a memory, in which the program and various pieces of data are stored. The object of the present invention can also be achieved in a manner such that the recording medium in which a program code (an executable format program, an intermediate code program, and a source program) of the control program for the gesture recognition apparatuses 1 and 1a, which are of the software implementing the above functions, is stored while being readable by a computer is supplied to the gesture recognition apparatuses 1 and 1a, and such that the computer (or the CPU or an MPU) reads and executes the program code recorded in the recording medium.

A non-transitory tangible medium can be used as the recording medium. Examples of the non-transitory tangible medium include tape systems such as a magnetic tape and a cassette tape, disk systems including magnetic disks such as a floppy disk (registered trademark) and a hard disk and optical disks such as a CD-ROM, an MO an MD, a DVD, and a CD-R, card systems such as an IC card (including a memory card) and an optical card, semiconductor memory systems such as a mask ROM, an EPROM, an EEPROM (registered trademark) and a flash ROM, and logic circuits such as a PLD (Programmable logic device) and an FPGA (Field Programmable Gate Array).

The gesture recognition apparatuses 1 and 1a may be configured to be able to be connected to a communication network, and the program code may be supplied through the communication network. There is no particular limitation to the communication network as long as the program code can be transmitted through the communication network. Examples of the communication network include the Internet, an intranet, an extranet, a LAN, an ISDN, a VAN, a CATV communication network, a virtual private network, a telephone line network, a mobile communication network, and a satellite communication network. There is no particular limitation to a transmission medium constituting the communication network as long as the program code can be transmitted through the transmission medium. Examples of the transmission medium include wired lines, such as IEEE 1394, a USB, a power-line carrier, a cable TV line, a telephone line, and an ADSL (Asymmetric Digital Subscriber Line), and wireless lines, such as infrared rays, such as IrDA and a remote controller, Bluetooth (registered trademark), IEEE 802.11 wireless, HDR (High Data Rate), NFC (Near Field Communication), DLNA (Digital Living Network Alliance), a mobile phone network, a satellite line, and a terrestrial digital network. The present invention can also be implemented by a mode of a computer data signal buried in a carrier wave, and the computer data signal is one in which the program code is embodied by electronic transmission.

The present invention can be applied to various display instruments including the display device, particularly to a television receiver, a personal computer, and a tablet terminal.

## Claims

1. A gesture recognition apparatus (1, 1a) for recognizing a gesture of a hand of a user from a moving image in which action of the hand of the user is photographed, comprising:
a face detector configured to detect a face of the user;
a shape identification part (123) configured to identify whether the hand is a right hand or a left hand;
a performer specification part (124) configured to specify a person, who is closest to the identified hand and whose face is located on a right side of the identified hand, as a performer of the gesture when the identified hand is the right hand, and specify a person, who is closest to the identified hand and whose face is located on a left side of the identified hand, as the performer of the gesture when the identified hand is the left hand;
a storage part (13) configured to store
an operator list;
a gesture-processing table for each operator listed in the operator list; and
feature quantities of each face of each operator listed in the operator list, the gesture-processing table indicates a correspondence relationship between
a gesture recognized by the apparatus for each operator listed in the operator list and
a performed processing content corresponding to the recognized gesture;
a face authentication part configured to authenticate the face of the performer by
determining a degree of similarity between a feature quantity of the face of the performer and a feature quantity of each face of each operator listed in the operator list; and
a processing performing part (126) configured to
specify the performer as one of the operators in the list based on highest degree of similarity between the feature quantity of the face of the performer and the feature quantity of the face of each operator in the list; and
perform the performed processing content corresponding to the recognized gesture for the operator specified by the processing performing part (126) by referring to the correspondence relationship in the gesture-processing table for the specified operator.

2. The gesture recognition apparatus (1, 1a) according to claim 1, wherein the hand has a shape in which all fingers are stretched, and
the shape identification part (123) is configured to identify that the hand is the right hand when a thumb of the hand is located in a right end portion of the hand, and identify that the hand is the left hand when the thumb of the hand is located in a left end portion of the hand.

3. The gesture recognition apparatus (1, 1a) according to claim 2, wherein the shape identification part (123) is configured to extract leading end portions of the hand, and identify the leading end portion, which has a lowest position in a vertical direction of the moving image among the extracted leading end portions, as the thumb.

4. The gesture recognition apparatus (1, 1a) according to claim 1, wherein the hand has the shape in which only an index finger is stretched, and
the shape identification part (123) is configured to identify that the hand is the right hand when the index finger of the hand is located on right side of the hand, and identify that the hand is the left hand when the index finger of the hand is located on the left side of the hand.

5. The gesture recognition apparatus (1, 1a) according to any of the preceding claims, wherein the processing performing part (126) is configured to add the feature quantity of the face of the performer to the operator list and configured to specify or certify the performer as the operator when the degree of similarity determined by the face authentication part is less than a predetermined value.

6. The gesture recognition apparatus (1, 1a) according to any of the preceding claims, wherein the processing performing part (126) does not accept the gesture other than the performer for a predetermined time after the performer is specified or certified as the operator.

7. The gesture recognition apparatus (1, 1a) according to any one of claims 1 to 6, further comprising a gesture start determination part (121, 121a) configured to determine whether the gesture made by the hand is started based on a predetermined condition,
wherein the shape identification part (123) is configured to identify the hand when the gesture start determination part (121, 121a) determines that the gesture made by the hand is started.

8. The gesture recognition apparatus (1, 1a) according to claim 7, wherein the predetermined condition is action in which the user waves the hand.

9. The gesture recognition apparatus (1, 1a) according to claim 7, wherein the predetermined condition is that an angle formed by a predetermined direction and a sight line direction of the user is less than a predetermined value for a given time.

10. The gesture recognition apparatus (1, 1a) according to any one of claims 1 to 9, further comprising an instrument controller (126) configured to issue an instruction to an external instrument to perform the processing corresponding to the gesture.

11. The gesture recognition apparatus (1, 1a) according to claim 1, wherein the processing performing part (126) is configured to change the gesture-processing table according to a gender or an age of each operator, and the gender and the age of said operator is estimated based on a feature quantity of the face of said operator.

12. A display instrument (1000) comprising: the gesture recognition apparatus (1, 1a) according to claim 10; and a display device (2) in which operation control is performed by the gesture recognition apparatus (1, 1a).

13. A method for controlling a gesture recognition apparatus (1, 1a) that recognizes a gesture of a hand of a user from a moving image in which action of the hand of the user is photographed, the method comprising:
detecting the a face of the user;
identifying whether the hand detected in the moving image is a right hand or a left hand (S103); and
specifying a person, who is closest to the identified hand and whose face is located on a right side of the identified hand, as a performer of the gesture when the identified hand is the right hand, and specifying a person, who is closest to the identified hand and whose face is located on a left side of the identified hand, as the performer of the gesture when the identified hand is the left hand (S104);
providing an operator list, a gesture-processing table for each operator listed in the operator list, and feature quantities of each face of each operator listed in the operator list, the gesture-processing table indicating a correspondence relationship between a gesture recognized by the apparatus for each operator listed in the operator list and a performed processing content corresponding to the recognized gesture;
determining a degree of similarity between a feature quantity of the face of the performer and the feature quantity of each face of each operator listed in the operator list;
specifying the performer as one of the operators in the list based on highest degree of similarity between the feature quantity of the face of the performer and the feature quantity of the face of each operator in the list; and
performing a performed processing content corresponding to the recognized gesture for the operator specified by the processing performing part (126) by referring to the correspondence relationship in the gesture-processing table for the specified operator.

14. A computer readable medium storing a control program that causes a computer to perform each piece of processing of the gesture recognition apparatus (1, 1a) controlling method according to claim 13.

## Patentansprüche

1. Gestenerkennungsvorrichtung (1, 1a) zum Erkennen einer Geste einer Hand eines Nutzers anhand eines sich bewegenden Bildes, wobei eine Aktion der Hand des Nutzers fotografiert wird, umfassend:
einen Gesichtsdetektor, der dafür ausgestaltet ist, zu detektieren das Gesicht des Nutzers;
einen Formidentifizierungsteil (123), der dafür ausgestaltet ist zu identifizieren, ob die Hand eine rechte Hand oder eine linke Hand ist;
einen Ausführerspezifikationsteil (124), der dafür ausgestaltet ist, eine Person, die sich der identifizierten Hand am nächsten befindet und deren Gesicht sich auf einer rechten Seite der identifizierten Hand befindet, als einen Ausführer der Geste zu spezifizieren, wenn die identifizierte Hand die rechte Hand ist, und eine Person, die sich der identifizierten Hand am nächsten befindet und deren Gesicht sich auf einer linken Seite der identifizierten Hand befindet, als den Ausführer der Geste zu spezifizieren, wenn die identifizierte Hand die linke Hand ist;
einen Speicherteil (13), der dafür ausgestaltet ist, Folgendes zu speichern:
eine Bedienerliste;
eine Gestenverarbeitungstabelle für jeden Bediener, der in der Bedienerliste gelistet ist; und
Gesichtszug-Quantitäten jedes Gesichts jedes Bedieners, der in der Bedienerliste gelistet ist, wobei die Gestenverarbeitungstabelle eine Entsprechungsbeziehung zwischen einer durch die Vorrichtung erkannten Geste für jeden Bediener, der in der Bedienerliste gelistet ist, und einem ausgeführten Verarbeitungsinhalt, welcher der erkannten Geste entspricht, anzeigt;
einen Gesichtsauthentifizierungsteil, der dafür ausgestaltet ist, das Gesicht des Ausführers durch Bestimmen eines Ähnlichkeitsgrades zwischen einer Gesichtszug-Quantität des Gesichts des Ausführers und einer Gesichtszug-Quantität jedes Gesichts jedes Bedieners, der in der Bedienerliste gelistet ist, zu authentifizieren; und
einen Verarbeitungsausführungsteil (126), der dafür ausgestaltet ist,
den Ausführer als einen der Bediener in der Liste anhand des höchsten Ähnlichkeitsgrades zwischen der Gesichtszug-Quantität des Gesichts des Ausführers und der Gesichtszug-Quantität des Gesichts jedes Bedieners in der Liste zu spezifizieren; und
den ausgeführten Verarbeitungsinhalt, welcher der erkannten Geste für den Bediener entspricht, der durch den Verarbeitungsausführungsteil (126) spezifiziert wurde, anhand der Entsprechungsbeziehung in der Gestenverarbeitungstabelle für den spezifizierten Bediener auszuführen.

2. Gestenerkennungsvorrichtung (1, 1a) nach Anspruch 1, wobei die Hand eine Form hat, bei der alle Finger ausgestreckt sind, und
der Formidentifizierungsteil (123) dafür ausgestaltet ist zu identifizieren, dass die Hand die rechte Hand ist, wenn sich der Daumen der Hand in einem rechten Endabschnitt der Hand befindet, und zu identifizieren, dass die Hand die linke Hand ist, wenn sich der Daumen der Hand in einem linken Endabschnitt der Hand befindet.

3. Gestenerkennungsvorrichtung (1, 1a) nach Anspruch 2, wobei
der Formidentifizierungsteil (123) dafür ausgestaltet ist, Vorderendabschnitte der Hand zu extrahieren und den Vorderendabschnitt, der eine niedrigste Position in einer vertikalen Richtung des sich bewegenden Bildes unter den extrahierten Vorderendabschnitten hat, als den Daumen zu identifizieren.

4. Gestenerkennungsvorrichtung (1, 1a) nach Anspruch 1, wobei die Hand die Form hat, bei der nur ein Zeigefinger ausgestreckt ist, und
der Formidentifizierungsteil (123) dafür ausgestaltet ist zu identifizieren, dass die Hand die rechte Hand ist, wenn sich der Zeigefinger der Hand auf der rechten Seite der Hand befindet, und zu identifizieren, dass die Hand die linke Hand ist, wenn sich der Zeigefinger der Hand auf der linken Seite der Hand befindet.

5. Gestenerkennungsvorrichtung (1, 1a) nach einem der vorangehenden Ansprüche, wobei der Verarbeitungsausführungsteil (126) dafür ausgestaltet ist, die Gesichtszug-Quantität des Gesichts des Ausführers zu der Bedienerliste hinzuzufügen, und dafür ausgestaltet ist, den Ausführer als den Bediener zu spezifizieren oder zu zertifizieren, wenn der durch den Gesichtsauthentifizierungsteil ermittelte Ähnlichkeitsgrad geringer ist als ein zuvor festgelegter Wert.

6. Gestenerkennungsvorrichtung (1, 1a) nach einem der vorangehenden Ansprüche, wobei der Verarbeitungsausführungsteil (126) die Geste, die von einer anderen Person als dem Ausführer ausgeführt wird, für eine zuvor festgelegte Zeit, nachdem der Ausführer als der Bediener spezifiziert oder zertifiziert wurde, nicht akzeptiert.

7. Gestenerkennungsvorrichtung (1, 1a) nach einem der Ansprüche 1 bis 6, die des Weiteren einen Gestenstartbestimmungsteil (121, 121a) umfasst, der dafür ausgestaltet ist, anhand einer zuvor festgelegten Bedingung zu bestimmen, ob die durch die Hand vollzogene Geste begonnen wird,
wobei der Formidentifizierungsteil (123) dafür ausgestaltet ist, die Hand zu identifizieren, wenn der Gestenstartbestimmungsteil (121, 121a) bestimmt, dass die durch die Hand vollzogene Geste begonnen wird.

8. Gestenerkennungsvorrichtung (1, 1a) nach Anspruch 7, wobei die zuvor festgelegte Bedingung eine Aktion ist, bei welcher der Nutzer mit der Hand winkt.

9. Gestenerkennungsvorrichtung (1, 1a) nach Anspruch 7, wobei die zuvor festgelegte Bedingung ist, dass ein Winkel, der durch eine zuvor festgelegte Richtung und eine Sichtlinienrichtung des Nutzers gebildet wird, eine bestimmte Zeit lang kleiner ist als ein zuvor festgelegter Wert.

10. Gestenerkennungsvorrichtung (1, 1a) nach einem der Ansprüche 1 bis 9, die des Weiteren eine Instrumentensteuereinheit (126) umfasst, die dafür ausgestaltet ist, eine Instruktion an ein externes Instrument auszugeben, die der Geste entsprechende Verarbeitung auszuführen.

11. Gestenerkennungsvorrichtung (1, 1a) nach Anspruch 1, wobei der Verarbeitungsausführungsteil (126) dafür ausgestaltet ist, die Gestenverarbeitungstabelle gemäß einem Geschlecht oder einem Alter jedes Bedieners zu ändern, und das Geschlecht und das Alter des Bedieners anhand einer Gesichtszug-Quantität des Gesichts des Bedieners geschätzt wird.

12. Anzeigeinstrument (1000), umfassend: die Gestenerkennungsvorrichtung (1, 1a) nach Anspruch 10; und eine Anzeigevorrichtung (2), bei der eine Betriebssteuerung durch die Gestenerkennungsvorrichtung (1, 1a) ausgeführt wird.

13. Verfahren zum Steuern einer Gestenerkennungsvorrichtung (1, 1a), die eine Geste einer Hand eines Nutzers anhand eines sich bewegenden Bildes erkennt, wobei eine Aktion der Hand des Nutzers fotografiert wird, wobei das Verfahren Folgendes umfasst:
Detektieren des Gesichts des Nutzers;
Identifizieren, ob die in dem sich bewegenden Bild detektierte Hand eine rechte Hand oder eine linke Hand ist (S103); und
Spezifizieren einer Person, die sich der identifizierten Hand am nächsten befindet und deren Gesicht sich auf einer rechten Seite der identifizierten Hand befindet, als einen Ausführer der Geste, wenn die identifizierte Hand die rechte Hand ist, und Spezifizieren einer Person, die sich der identifizierten Hand am nächsten befindet und deren Gesicht sich auf einer linken Seite der identifizierten Hand befindet, als den Ausführer der Geste, wenn die identifizierte Hand die linke Hand ist (S104);
Bereitstellen einer Bedienerliste, einer Gestenverarbeitungstabelle für jeden Bediener, der in der Bedienerliste gelistet ist, und von Gesichtszug-Quantitäten jedes Gesichts jedes Bedieners, der in der Bedienerliste gelistet ist, wobei die Gestenverarbeitungstabelle eine Entsprechungsbeziehung zwischen einer durch die Vorrichtung erkannten Geste für jeden Bediener, der in der Bedienerliste gelistet ist, und einem ausgeführten Verarbeitungsinhalt, welcher der erkannten Geste entspricht, anzeigt;
Bestimmen eines Ähnlichkeitsgrades zwischen einer Gesichtszug-Quantität des Gesichts des Ausführers und der Gesichtszug-Quantität jedes Gesichts jedes Bedieners, der in der Bedienerliste gelistet ist,
Spezifizieren des Ausführers als einen der Bediener in der Liste anhand des höchsten Ähnlichkeitsgrades zwischen der Gesichtszug-Quantität des Gesichts des Ausführers und der Gesichtszug-Quantität des Gesichts jedes Bedieners in der Liste; und
Ausführen eines ausgeführten Verarbeitungsinhalts, welcher der erkannten Geste für den Bediener entspricht, der durch den Verarbeitungsausführungsteil (126) spezifiziert wurde, anhand der Entsprechungsbeziehung in der Gestenverarbeitungstabelle für den spezifizierten Bediener.

14. Computerlesbares Medium, das ein Steuerungsprogramm speichert, das einen Computer veranlasst, jeden Teil der Verarbeitung des Steuerungsverfahrens nach Anspruch 13 für die Gestenerkennungsvorrichtung (1, 1a) auszuführen.

## Revendications

1. Appareil de reconnaissance de geste (1, 1a) pour un geste d'une main d'un utilisateur à partir d'une image animée dans laquelle est photographiée une action de la main de l'utilisateur, comprenant :
un détecteur de visage configuré pour détecter un visage de l'utilisateur ;
une partie d'identification de forme (123) configurée pour identifier si la main est une main droite ou une main gauche ;
une partie de spécification d'exécutant (124) configurée pour spécifier une personne, qui est la plus proche de la main identifiée et dont le visage est situé sur un côté droit de la main identifiée, en tant qu'exécutant du geste lorsque la main identifiée est la main droite, et
spécifier une personne, qui est la plus proche de la main identifiée et dont le visage est situé sur le côté gauche de la main identifiée, en tant qu'exécutant du geste lorsque la main identifiée est la main gauche ;
une partie de stockage (13) configurée pour stocker une liste d'opérateurs ;
une table de traitement de gestes pour chaque opérateur listé dans la liste d'opérateurs ; et
des quantités de caractéristiques de chaque visage de chaque opérateur listé dans la liste d'opérateurs,
la table de traitement de gestes indique une relation de correspondance entre
un geste reconnu par l'appareil pour chaque opérateur listé dans la liste d'opérateurs et
un contenu de traitement exécuté correspondant au geste reconnu ;
une partie d'authentification de visage configurée pour authentifier le visage de l'exécutant en déterminant un degré de similitude entre une quantité de caractéristiques du visage de l'exécutant et une quantité de caractéristiques de chaque visage de chaque opérateur listé dans la liste d'opérateurs ; et
une partie d'exécution de traitement (126) configurée pour spécifier l'exécutant en tant que l'un des opérateurs dans la liste sur la base du plus haut degré de similitude entre la quantité de caractéristiques du visage de l'exécutant et la quantité de caractéristiques du visage de chaque opérateur dans la liste ; et
exécuter le contenu de traitement exécuté correspondant au geste reconnu pour l'opérateur spécifié par la partie d'exécution de traitement (126) en se référant à la relation de correspondance dans la table de traitement de gestes pour l'opérateur spécifié.

2. Appareil de reconnaissance de geste (1, 1a) selon la revendication 1, dans lequel la main a une forme dans laquelle tous les doigts sont étirés, et
la partie d'identification de forme (123) est configurée pour identifier que la main est la main droite quand un pouce de la main est situé dans une partie d'extrémité droite de la main, et identifier que la main est la main gauche quand le pouce de la main est situé dans une partie d'extrémité gauche de la main.

3. Appareil de reconnaissance de geste (1, 1a) selon la revendication 2, dans lequel la partie d'identification de forme (123) est configurée pour extraire des parties d'extrémité avant de la main, et identifier la partie d'extrémité avant, qui a une position la plus basse dans une direction verticale de l'image animée parmi les parties d'extrémité avant extraites, comme le pouce.

4. Appareil de reconnaissance de geste (1, 1a) selon la revendication 1, dans lequel la main a la forme dans laquelle seul un index est étiré, et
la partie d'identification de forme (123) est configurée pour identifier que la main est la main droite lorsque l'index de la main est situé sur le côté droit de la main, et identifier que la main est la main gauche lorsque l'index de la main est situé sur le côté gauche de la main.

5. Appareil de reconnaissance de gestes (1, 1a) selon l'une quelconque des revendications précédentes, dans lequel la partie d'exécution de traitement (126) est configurée pour ajouter la quantité de caractéristiques du visage de l'exécutant à la liste d'opérateurs, et configurée pour spécifier ou certifier l'exécutant en tant qu'opérateur lorsque le degré de similitude déterminé par la partie d'authentification de visage est inférieur à une valeur prédéterminée.

6. Appareil de reconnaissance de geste (1, 1a) selon l'une quelconque des revendications précédentes, dans lequel la partie d'exécution de traitement n'accepte pas le geste effectué par une personne autre que l'exécutant pendant une durée prédéterminée après que l'exécutant a été spécifié ou certifié en tant qu'opérateur.

7. Appareil de reconnaissance de geste (1, 1a) selon l'une quelconque des revendications 1 à 6, comprenant en outre une partie de détermination de début de geste (121, 121a) configurée pour déterminer si le geste fait par la main est démarré sur la base d'une condition prédéterminée, dans lequel la partie d'identification de forme (123) est configurée pour identifier la main lorsque la partie de détermination de début de geste (121, 121a) détermine que le geste fait par la main est démarré.

8. Appareil de reconnaissance de geste (1, la) selon la revendication 7, dans lequel la condition prédéterminée est une action dans laquelle l'utilisateur agite la main.

9. Appareil de reconnaissance de geste (1, la) selon la revendication 7, dans lequel la condition prédéterminée est qu'un angle formé par une direction prédéterminée et une direction de ligne de visée de l'utilisateur est inférieur à une valeur prédéterminée pendant un temps donné.

10. Appareil de reconnaissance de geste (1, la) selon l'une quelconque des revendications 1 à 9, comprenant en outre un contrôleur d'instrument (126) configuré pour fournir une instruction à un instrument extérieur pour effectuer le traitement correspondant au geste.

11. Appareil de reconnaissance de gestes (1, la) selon la revendication 1, dans lequel la partie d'exécution de traitement (126) est configurée pour modifier la table de traitement de gestes selon le sexe ou l'âge de chaque opérateur, et le sexe et l'âge dudit l'opérateur est estimé sur la base d'une quantité de caractéristiques du visage dudit opérateur.

12. Instrument d'affichage (1000) comprenant : l'appareil de reconnaissance de geste (1, la) selon la revendication 10 ; et un dispositif d'affichage (2) dans lequel la commande d'opération est effectuée par l'appareil de reconnaissance de geste (1, la).

13. Procédé pour commander un appareil de reconnaissance de geste (1, 1 a) qui reconnaît un geste d'une main d'un utilisateur à partir d'une image animée dans laquelle une action de la main de l'utilisateur est photographiée, le procédé comprenant de :
détecter le visage de l'utilisateur ;
identifier si la main détectée dans l'image animée est une main droite ou une main gauche (S103) ; et
spécifier une personne, qui est la plus proche de la main identifiée et dont le visage est situé sur un côté droit de la main identifiée, en tant qu'exécutant du geste lorsque la main identifiée est la main droite, et
spécifier une personne, qui est la plus proche de la main identifiée et dont le visage est situé sur le côté gauche de la main identifiée, en tant qu'exécutant du geste lorsque la main identifiée est la main gauche ;
fournir une liste d'opérateurs, une table de traitement de gestes pour chaque opérateur listé dans la liste d'opérateurs, et des quantités de caractéristiques de chaque visage de chaque opérateur listé dans la liste d'opérateurs, la table de traitement de gestes indiquant une relation de correspondance entre un geste, reconnu par l'appareil pour chaque opérateur listé dans la liste d'opérateurs et un contenu de traitement exécuté correspondant au geste reconnu ;
déterminer un degré de similitude entre une quantité de caractéristiques du visage de l'exécutant et la quantité de caractéristiques de chaque visage de chaque opérateur listé dans la liste d'opérateurs ; et
spécifier l'exécutant en tant que l'un des opérateurs dans la liste sur la base du plus haut degré de similitude entre la quantité de caractéristiques du visage de l'exécutant et la quantité de caractéristiques du visage de chaque opérateur dans la liste ; et
exécuter un contenu de traitement exécuté correspondant au geste reconnu pour l'opérateur spécifié par la partie d'exécution de traitement (126) en se référant à la relation de correspondance dans la table de traitement de gestes pour l'opérateur spécifié.

14. Support lisible par ordinateur stockant un programme de commande qui amène un ordinateur à exécuter chaque partie de traitement du procédé de commande d'appareil de reconnaissance de geste (1, la) selon la revendication 13.
